# EUROPÄISCHE PATENTSCHRIFT

(11) **EP 0 452 534 B1**
(45) Veröffentlichungstag und Bekanntmachung des Hinweises auf die Patenterteilung: **30.08.1995**
(21) Anmeldenummer: 90110533.8
(22) Anmeldetag: 02.06.1990
(51) Int. Cl.: B09B 3/00, F25B 45/00

(54) **Anlage zur Rückgewinnung von Öl und Fluorkohlenwasserstoff (FCKW) aus ausrangierten Kühlmöbeln, zum Beispiel Kühlschränken**
Plant for the recycling of oil and fluorocarbons from discarded refrigerators
Installation pour le recyclage de l'huile et des fluorocarbones contenus dans des réfrigérateurs mis au rebut

(30) Priorität: 21.04.1990 DE 4012714
(43) Veröffentlichungstag der Anmeldung: 23.10.1991
(73) Patentinhaber: KSR Kühl-System-Recycling GmbH & Co., D-44866 Bochum (DE)
(72) Erfinder: Kroll, Willi, 44628 Herne (DE); Augstein, Klaus, 45481 Mühlheim/Ruhr (DE)
(74) Vertreter: Eichelbaum, Lambert, Dipl.-Ing.

(56) Entgegenhaltungen:
- EP-A- 0 336 254
- DE-A- 3 829 923
- DE-U- 8 902 602
- DE-U- 8 907 312
- DE-U- 8 914 957
- US-A- 3 698 419
- US-A- 4 768 347

## Beschreibung

Die Erfindung betrifft eine Anlage zur Rückgewinnung von Öl und Fluorkohlenwasserstoff (FCKW) aus ausrangierten Kühlmöbeln, zum Beispiel Kühlschränken gemäß dem Oberbegriff des Anspruches 1.

Mit der Erfindung werden umweltgefährdende Stoffe entsorgt und soweit sinnvoll einer erneuten Verwendung zugeführt, die bei der Verschrottung von ausrangierten Kühlmöbeln anfallen. Hierunter sind vor allem aus privaten Haushalten anfallende Kühlschränke, Tiefkühlschränke, Gefriertruhen, eingebaute Kühlfächer o. dgl. zu verstehen, die in erheblicher Menge verbreitet sind und deswegen bei laufender Erneuerung als Altmaterial in entspechendem Umfang anfallen; demgegenüber spielen die anfallenden gewerblichen Kühlmöbel eine wesentlich geringere Rolle. In erster Linie zählen zu den umweltgefährdenden die Halogenwasserstoffe, die als Frigene bekannt sind und zum Beispiel als R12, R22, R512, o. dgl.in den Kühlmöbeln enthalten sind und u.a. für die Beeinträchtigungen der Ozonschicht der Erde verantwortlich gemacht werden; ferner gehört Öl zu den umweltgefährdenden Stoffen, welches in erheblicher Menge zur Schmierung des Verflüssigers dient, der zur Kälteerzeugung in derartigen Kühlmöbeln vorgesehen ist. Diese beiden Stoffe sind jedoch auch wertvolle Rohstoffe, welche in erheblichem Umfang bei der Erzeugung neuer Kühlmöbel benötigt werden, wobei zurückgewonnenes Öl, wenn es in der erforderlichen Reinheit anfällt, natürlich auch außerhalb der Kühlmöbelindustrie eingesetzt werden kann.

Die zunehmenden Entsorgungsschwierigkeiten bei Kühlmöbeln haben dazu geführt, daß immer größere Anteile der alten Kühlmöbel nicht mehr ohne weiteres deponiert, sondern vor ihrer endgülten Verschrottung von den umweltgefährdenden Stoffen befreit werden müssen. Diese Entsorgung muß jedoch wirtschaftlich betrieben werden und erfolgt an Sammelstellen, in denen ungelernte bzw. angelernte Arbeitskräfte mit den Entsorgungsarbeiten beschäftigt sind. Die dazu erforderlichen Anlagen sind indessen wegen der hohen Anforderungen an die stoffliche Reinheit der zurückgewonnenen Stoffe und deren schwierige Handhabbarkeit in gasförmiger und flüssiger Phase hochgradig differenziert aufgebaut. Es muß daher dafür gesorgt werden, daß die Anlagenbaugruppen regelmäßig von Fachleuten geprüft und gewartet werden, im übrigen aber störungsfrei ihren Dienst verrichten können, damit die benötigten Fachkräfte nicht ständig anwesend zu sein brauchen.

Die Erfindung geht von einer derartigen Anlage aus, welche bereits bekannt ist (DE-A-38 29 923). Dabei wird in den Ölabscheider das zähflüssige Gemisch aus FCKW und Öl gesaugt, welcher nach spezifischem Gewicht die beiden Stoffe voneinander grob trennt. Aus dem Ölabscheider gelangt das gasförmige FCKW-Öl-Gemisch, welches von dem Verdichter der Anlage angesaugt wird, zunächst durch Reinigungsstufen, in denen Restöl und Wasser abgeschieden und der gasförmige FCKW in einem Filter von seinen weiteren Verunreinigungen befreit wird, ehe er in den Verdichter eintritt. Hinter diesem werden Restöl, Wasser und Feststoffe erneut abgeschieden, bevor der FCKW endgültig verflüssigt und dem Auffangbehälter zugeführt wird, in dem er in einer Reinheit enthalten ist, die seine Wiederverwendung ohne weiteres zuläßt.

Bei derartigen Anlagen entsteht das Problem, wie man aus der im Vergleich mit der Gesamtmenge relativ kleinen Teilmenge, zum Beispiel der eines Kühlschrankes rationell diejenigen Mengen an Öl und FCKW gewinnen kann, die für den wirtschaftlichen Betrieb einer solchen differenzierten Anlage erforderlich sind. Daher sind solche Anlagen bisher an Sammelstellen eingerichtet und vorzugsweise unter Dach installiert. Ihre Wartung durch das nicht ständig anwesende Fachpersonal erfolgt in regelmäßigen, zeitlichen Abständen, die für die einzelnen Anlagenteile unterschiedlich sind. Die kürzesten Wartungszeiträume gelten für die im übrigen hochgradig komplizierten Filter, deren Funktionstüchtigkeit über die Reinheit und restlose Entsorgung des anfallenden Frigens entscheidet. Die ständig anwesenden Kräfte sind angelernt. Es ist aus Sicherheitsgründen nicht zulässig, Wartungsarbeiten mit diesen Kräften ausführen zu lassen. Deshalb sind die entscheidenden Anlagenteile abgesichert, zum Beispiel verplombt. Nur Fachpersonal darf die Plomben entfernen und die Wartungsarbeiten durchführen.

Aber auch die von dem Fachpersonal durchzuführenden Arbeiten erfordern unterschiedliche Qualifikationen. Insbesondere die Filter müssen von eigens ausgebildeten und vertrauenswürdigen Personen gewartet werden, die in der Regel auch die übrigen Anlagenteile warten können. Jedoch ließen sich diese Anlagenteile auch von Leuten bearbeiten, die die Filter nicht kontrollieren, auswechseln und einbauen dürfen. Hieraus entstehen in der Praxis erhebliche Probleme, weil die Anlagen u.a. in großen Entfernungen voneinander in Betrieb sind. Dadurch wird der Wartungsaufwand extrem hoch, weil Fachleute mit der höchsten Qualifikation die gesamte Anlage warten müssen.

Der Erfindung liegt die Aufgabe zugrunde, die als bekannt vorausgesetzte Anlage auf einfache Weise so einzurichten, daß sie einerseits eine Beeinträchtigung der Lebensdauer des Verdichters aufgrund schwerer Verunreinigungen und Ölbestandteile im FCKW-Öl-Gemisch ausschließt und andererseits unabhängig von ihren Aufstellungsorten und ihrem Betrieb mit ungelernten bzw. angelernten Kräften eine hohe Sicherheit gegen Qualitätsverschlechterungen der zurückgewonnenen Rohstoffe oder Freiwerden gefährdender Bestandteile aus den ausrangierten Kühlmöbeln bietet.

Diese Aufgabe löst die Erfindung mit den Merkmalen des Anspruches 1. Weitere Merkmale sind Gegenstand der Unteransprüche.

Gemäß der Erfindung wird die neue Anlage auf mehrere Gehäuse aufgeteilt, die eine räumliche Trennung verschiedener Anlageteile und gleichzeitig eine Aufteilung auf Wartungsarbeiten ermöglicht, die während unterschiedlicher Zeiträume und von unterschiedlich qualifizierten Fachleuten gewartet werden. Durch die Abtrennung der Anlagenteile von dem Ölabscheider, der sich im Verfahrensstammbaum an die abzusaugenden Kühlkreisläufe der ausrangierten Kühlmöbel anschließt von den übrigen Anlagenteilen, können diese in beliebiger Entfernung von den zu entsorgenden Kühlmöbeln aufgestellt und gewartet werden. Dazu gehören auch die Filter für den Fall, daß die Anlage in der Nähe des Standortes derjenigen Fachkräfte aufgestellt wird, an dem sich die höchst qualifizierten Fachkräfte aufhalten, die dann die gesamte Anlage warten. Bei der erfindungsgemäßen Anlage sind aber die Filter mehrfach vorhanden, nämlich ein zweiter Satz der Filter ist in eigenen Gehäusen untergebracht, die für sich gewartet werden und entsprechend verplombt sind. Diese Filtergehäuse werden in dem unterstellten Fall der unmittelbaren Nähe der Anlage zum Standort der höchst qualifizierten Fachkräfte nicht benötigt. In diesem Fall werden die im gemeinsamen Gehäuse untergebrachten Filter bestückt. Wenn aber die betreffende Anlage in größerer Entfernung von diesem Standort, z.B. im Ausland betrieben wird, werden in den zusätzlichen Filtergehäusen die Filter eingesetzt und in dem für die anderen Anlageteile gemeinsamen Gehäuse die Filter entfernt oder umgangen. Dann ist es möglich, das gemeinsame Gehäuse durch ortsansässige oder in der Nähe des Aufstellungsortes verfügbare Fachkräfte betreuen zu lassen, während die Filter von den dazu anreisenden, besonders qualifizierten Fachkräften gewartet werden, was in verhältnismäßig größeren zeitlichen Abständen veranlaßt werden muß.

Die Erfindung bietet außer dem Vorteil eines rationellen Betriebes der Anlage noch andere Vorteile. Durch die dazu vorgeschlagene Aufteilung der Anlage lassen sich ihre Teile so zusammenfassen, daß sie auf einem Lkw aufgestellt werden können, wodurch die ganze Anlage mobil wird und daher den Sammelorten der ausrangierten Kühlmöbel folgen kann. Außerdem sind in dem gemeinsamen Gehäuse auch diejenigen Anlagenteile untergebracht, von denen z.B. die von dem Verdichter besonders unangenehmen Geräuschbelästigungen ausgehen. Dieses Gehäuse läßt sich daher in entsprechender Entfernung von den Arbeitsplätzen oder sonstigen geräuschempfindlichen Orten aufstellen.

Ferner kann man die Aufstellung des Ölabscheiders, der sich an die abzusaugenden Kühlkreisläufe der ausrangierten Kühlmöbel anschließt, unabhängig von den übrigen Anlagenteilen nach zweckmäßigen Gesichtspunkten wählen. Gemäß dem Anspruch 2 erfolgt das so, daß der Ansaugweg zwischen dem Ölabscheider und dem Kühlkreislauf eines zu entsorgenden Kühlmöbels möglichst kurz ist. Dadurch wird der Zähflüssigkeit des abzusaugenden FCKW-Öl-Gemisches angemessen Rechnung getragen. Durch die unmittelbare Nähe zu dem zu entsorgenden Kühlmöbel wird der Ansaugvorgang beschleunigt und damit der Durchsatz des laufend mit ausrangierten Kühlmöbeln besetzten Fließbandes optimiert.

Gemäß einer weiteren Ausführungsform der Erfindung sind die in dem gemeinsamen Gehäuse untergebrachten energieverzehrenden Anlagenteile gekühlt. Das dazu vorgesehene Gebläse ist mit seiner Druckseite an die freie Atmosphäre angeschlossen, so daß der Abluftstrom des Gebläses nach außen unmittelbar ins Freie geführt wird, während der Ansaugstrom aus der Hallenluft entnommen wird.

Diese Ausbildung der neuen Anlage ermöglicht es ferner, die Entsorgung der Kühlmöbel zu rationalisieren. Bei Verwirklichung der Merkmale des Anspruches 4 wird dazu der Ölabscheider benutzt. Infolge der oben beschriebenen Beschleunigung des Ansaugvorganges des FCKW-Öl-Gemisches läßt sich der Durchsatz an zu entsorgenden Kühlmöbeln so weit steigern, daß ein Fließband verwendet werden kann. Dieses Fließband kann über mehrere Arbeitsplätze verfügen und mit angelernten Arbeitskräften betrieben werden. Diese haben lediglich die zu entsorgenden Kühlkreisläufe anzuschließen und Druckschalter oder Handabsperrventile zu betätigen. Insbesondere wird dabei die Anordnung mit den Merkmalen des Anspruches 5 getroffen.

Während einige Kühlmöbel einen leicht zu findenden Auslaßstutzen im Bereich der Kühlschlange aufweisen, braucht ein solcher nicht unbedingt bei anderen Kühlmöbeln überhaupt vorhanden zu sein, oder er läßt sich nur schwer ausfindig machen. Es ist daher bereits gängige Praxis, diese Saugleitung der Anlage an eine sogenannte Anstechzange anzuschließen, mit der die Leitung perforiert wird. Eine solche Anstechzange enthält an einem Zangenschenkel einen Stutzen mit einer Perforationsspitze und einem Schlauchnippel zum Anschluß der Saugleitung. Es hat sich herausgestellt, daß die Perforationsspitze einem hohen Verschleiß unterliegt, andererseits aber für die Rückgewinnung insbesondere des FCKW die entscheidende Dichtigkeit herbeiführt. Mit den Merkmalen des Anspruches 6 läßt sich dieser Tatsache Rechnung tragen. Hiernach ist die Anstechzange so ausgebildet, daß die Perforationsspitze auf einfache Weise ausgewechselt werden kann. In die Kehle läßt sich nämlich ein Schlüssel einsetzen, mit dem die Perforationsspitze herausgedreht und ausgewechselt wird, nachdem sie, selbstverständlich bei geschlossenem Ansaugventil, von dem Anschlußrohr getrennt wird.

Die meisten Kühlmöbel sind gegen die Aufheizung von außen isoliert. Dafür verwendet man allgemein Schaumstoffe, hauptsächlich Polyurethanschäume, welche bis heute allgemein ebenfalls mit Fluorkohlenwasserstoffen geschäumt werden. Die Entsorgung dieser in den geschlossenen Poren der Schäume enthaltenen gasförmigen Fluorkohlenwasserstoffe geschieht zur Zeit überhaupt nicht. Vielmehr werden die meisten Schaumstoffe deponiert. In diesen Fällen treten erhebliche Mengen von Fluorkohlenwasserstoffen mit der Zeit aus den Schäumen aus und gelangen in die Atmosphäre. Gemäß weiteren Ansprüchen werden diese Stoffe so entsorgt, daß eine Verunreinigung der Atmosphäre nicht mehr eintritt. Diese Merkmale der Erfindung sind deshalb nicht nur für die Anwendung in der erfindungsgemäßen Anlage geeignet, sondern können allgemein zur Entsorgung von Kunststoffschäumen benutzt werden, die als Treibmittel einen gasförmigen Stoff enthalten, der umweltschädlich oder umweltgefährdend ist, als der allerdings vor allem die beschriebenen Fluorkohlenwasserstoffe in Frage kommen.

Gemäß dem Grundgedanken der Erfindung wird der zu entsorgende Schaumstoff zunächst vorzerkleinert und zwar auf eine Teilchengröße, welche sich derart verarbeiten läßt, daß das in sämtlichen Poren der Partikel enthaltene Treibgas freigesetzt wird. Die dazu eingesetzten Zahnwalzen pressen die Partikel und zerreiben sie durch Scherkräfte, die die erforderliche Endzerkleinerung herbeiführen. Das ist eine Folge der im Anspruch 8 wiedergegebenen Zahnform der ineinandergreifenden Zahnwalzen. Das freigesetzte Treibmittel wird nicht in die Atmosphäre entlassen, sondern aufgefangen und abgeführt.

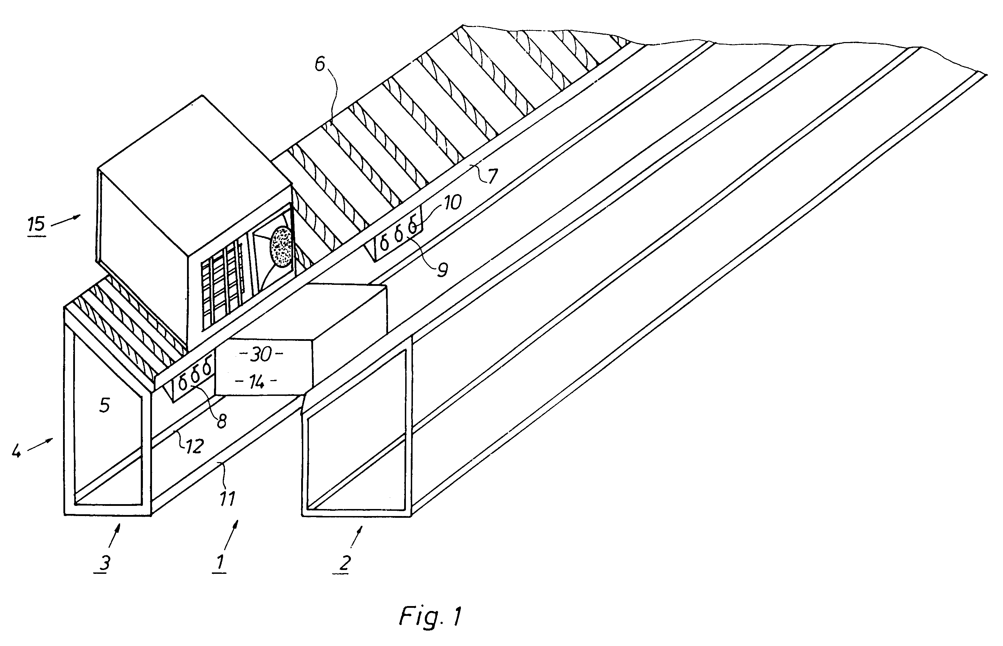

Die Einzelheiten, weitere Merkmale und andere Vorteile der Erfindung ergeben sich aus der nachfolgenden Beschreibung einer Anlage gemäß der Erfindung sowie einer Vorrichtung zur Entsorgung der beschriebenen Kunststoffschäume anhand der Figuren in der Zeichnung; es zeigen
- Fig. 1: in perspektivischer, abgebrochener Darstellung den Eingang der erfindungsgemäßen Anlage, auf der die Kühlmöbel an- und abtransportiert werden mit untergestelltem Ölabscheider,
- Fig. 2: schematisch, d.h. unter Fortlassung aller für das Verständnis der Erfindung nicht erforderlichen Einzelheiten die Aufteilung der Anlagengruppen gemäß der Erfindung,
- Fig. 3: eine Einzelheit aus der Darstellung der Fig. 2,
- Fig. 4: eine andere Ausführungsform der erfindungsgemäßen Anlage in Seitenansicht,
- Fig. 5: eine Stirnansicht des Gegenstandes der Fig. 4,
- Fig. 6: die andere Stirnseite der Anlage gemäß den Fig. 4 bis 5,
- Fig. 7: schematisch, d.h. unter Fortlassung aller für das Verständnis der Erfindung nicht erforderlichen Einzelheiten denjenigen Anlagenteil, mit dem die Isolierstoffe der entsorgten Kühlschränke entsorgt werden und
- Fig. 8: eine auszugsweise Ansicht einer Zahnwalze und eines Zahnwalzenpaares.

In einer allgemein mit (1) bezeichneten Fließbandanordnung befinden sich paarweise angeordnete Fließbänder (2, 3). Die Fließbänder sind identisch ausgebildet. Sie weisen ein Untergestell (4) mit einem geneigten Tisch (5) auf, der mit Querrollen (6) versehen ist, die entsprechend dem Tisch (5) nach innen geneigt und vor einer Führungsleiste (7) angeordnet sind. Unter dem Tisch befinden sich die Träger (8 bzw. 9) mit Druckknopfschaltern (10) als Betätigungsorganen von Handabsperr- oder Magnetventilen, die die nachgeordneten Anlagenteile schalten. Auf dem Untergestell (4), nämlich auf dessen parallelen Traversen (11, 12), ruht ein Behälter mit einem Sicherheitsventil (14). Die Anschlüsse des Ölbehälters, durch den dieser an die Kühlkreisläufe der Kühlmöbel angeschlossen wird, sind nicht dargestellt. Der bei (15) wiedergegebene Kühlschrank gelangt auf den Rollen (6) des Fließbandes (3) zu einem Arbeitsplatz, dessen Standort durch die Träger (8 bzw. 9) gekennzeichnet ist. Hier schließt eine Arbeitskraft in der nachfolgend zu beschreibenden Weise den Kühlkreislauf des Kühlschrankes (15) an die Anlage an, entleert diesen von dem enthaltenen FCKW-Ölgemisch durch Absaugen, schaltet danach die Absaugung aus und übergibt den entsorgten Kühlschrank (15) seiner weiteren Verwendung.

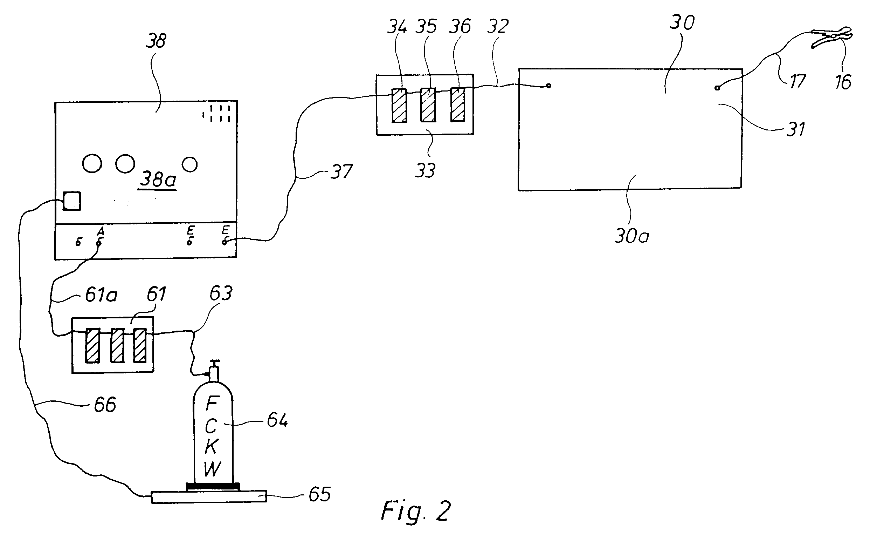

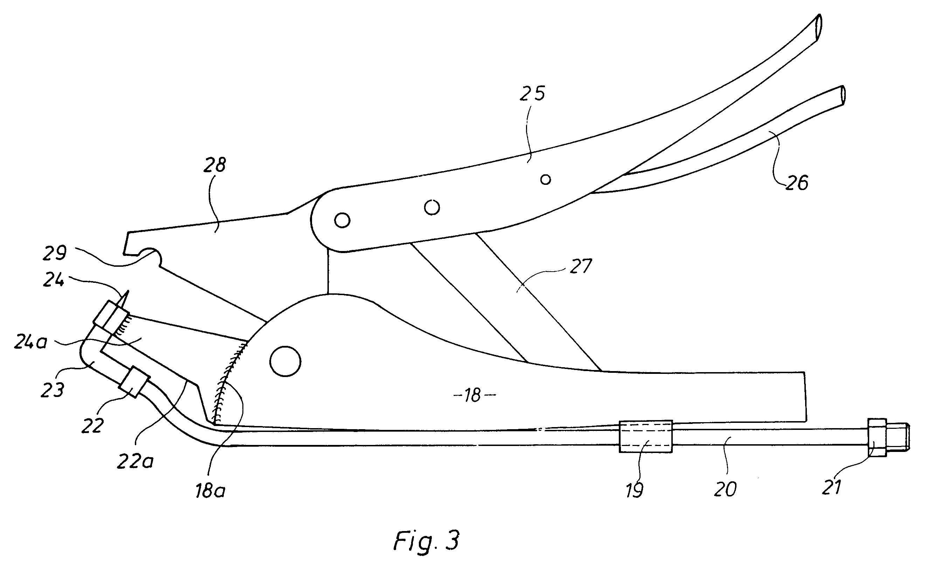

Aus der Darstellung der Fig. 2 ist ersichtlich, daß der Anschluß des Kühlkreislaufes des Kühlschrankes (15) mit einer Zangen einer sogenannten Anstechzange (16) erfolgt, die mit einem Absaugrohr (20) und einem daran anschließenden Schlauch (17) kombiniert ist Die Einzelheiten dieser Zange sind aus Fig. 3 ersichtlich. Danach ist der feste Zangenschenkel (18) mit einer Schelle (19) zur Befestigung eines Rohres (20) bzw. Schlauches und einem Nippel 21 versehen und bildet einen Teil der Absaugleitung. Sie führt zu einem Nippel (22) eines Winkelstutzens (23), der an einer Perforationsspitze (24) endet, welche durchbohrt und dadurch mit der Saugleitung verbunden ist.

Der bewegliche Zangenschenkel (25), der sich mit der Handhabe (26) und der Schwinge (27) in einer wählbaren Stellung sperren und entsperren läßt, wirkt mit dem anderen Zangenschenkel (18) zusammen, an dessen kurzen Arm ein Werkzeugträger (24a) bei (18a) angeschweißt ist. Dieser weist eine Kehle (22a) auf, wodurch ein Freiraum unter dem Nippel (22) geschaffen wird, der das Ansetzen eines Maulschlüssels zum Anziehen oder Lösen des Nippels zum Auswechseln der Teile (23-24) ermöglicht. Eine Ausnehmung (29) dient als Widerlager für eine Rohrleitung, die einen Teil eines Kühlkreislaufes eines Kühlschrankes bildet.

Zum Anschluß der Saugleitung (17) wird mit Hilfe der Perforationsspitze (24) die Rohrleitung des Kühlkreislaufes angestochen. Dann wird der bewegliche Zangenschenkel (28), der die Rohrleitung abstützt, gesperrt; mit dem Zangenschenkel (18) wird die Spitze (24) geführt.

Die Leitung (17) führt zu dem Ölabscheider mit dem Behälter (30) und dem Sicherheitsventil (14), welcher mehreren Arbeitsplätzen am Fließband (2 bzw. 3) gemeinsam ist. Der Ölabscheider ist beheizt. In ihn gelangt über die mit ihren weiteren Einzelheiten nicht dargestellte Zuführungsleitung (17) das abgesaugte FCKW-Ölgemisch, das im Ölabscheider, d.h. in dessen mit dem Sicherheitsventil abgesicherten Aufnahmeraum in seine Bestandteile separiert wird. Das schwerere Öl sammelt sich im unteren Bereich (30a) des Behälters (30), während die gasförmige Phase, d.h. FCKW aus dem oberen Bereich (31) über eine Saugleitung (32) abgeführt wird. In einem weiteren, für sich abgeschlossenen Gehäuse (33) befinden sich mehrere Filter (34 bis 36), welche zur Reinigung des gasförmigen FCKW benutzt werden. Diese Filter sind erforderlich, um Öl und andere Verunreinigungen, welche auch den nachfolgenden Kompressor (45) beeinträchtigen können, aus der gasförmigen Phase zu entfernen, die bei (32) in das Gehäuse gelangt. Das derart gereinigte Filtrat verläßt das Gehäuse (33) durch eine Schlauch- oder Rohrleitung (37) und gelangt in ein drittes Gehäuse (38), welches die nachstehend beschriebenen Anlagenteile enthält, d.h. diesen gemeinsam ist.

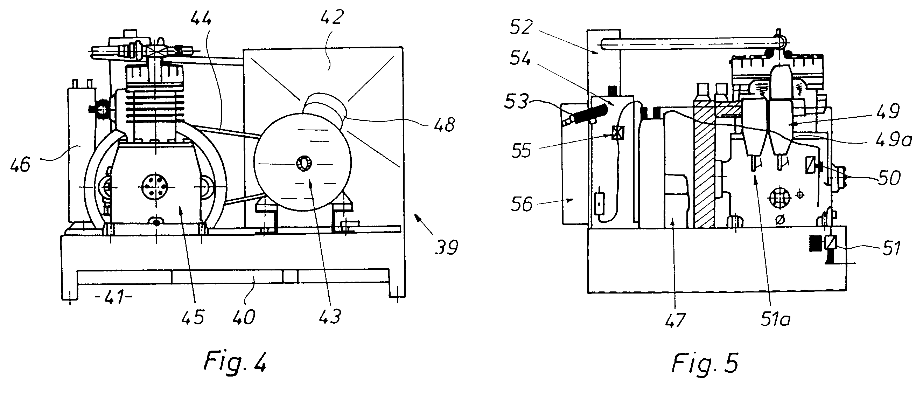

Das Gehäuse (38) ist gemäß der Darstellung nach den Fig.4 bis 6 aufgeständert, d.h. ein Untergestell (39) ruht auf einem Rahmen (40), wodurch sich unter dem Untergestell (39) ein Freiraum (41) ergibt, durch den Zugang zur Atmosphäre einer Halle besteht. Durch diesen Raum (41) saugt ein Gebläse, dessen Gehäuse (42), auf dem Untergestell (39) aufgebaut ist, durch das Gehäuse (38) Luft an und drückt die Luft seitlich aus dem Gehäuse (42), d.h. senkrecht zur Zeichenebene der Fig. 4 ins Freie. Die angesaugte Luft dient u.a. zur Kühlung eines Antriebsmotors (43), welcher über einen Riementrieb (44) die Welle eines Verdichters (45) antreibt. Der Verdichter (45) ist ebenfalls auf dem allgemein rechteckigen Untergestell (39) befestigt. Neben ihm steht ein Abscheider (46) für das Verdichteröl, der ebenfalls unter der bei (38) in Fig. 2 dargestellten Abdeckhaube zusammen mit den beschriebenen Anlagenteilen untergebracht ist.

Ein weiterer Verdichter (47) saugt die bei der Entleerung des Öls aus dem Abscheider (30) in diesem enthaltene Luft ab und ergänzt die Anlagenteile, mit denen das gasförmige FCKW-Ölgemisch weiterverarbeitet wird. Dieser Verdichter (47) hat eine wesentlich geringere Leistung als der Verdichter (45) und kann zur gasförmigen Absaugung von R22-502 eingesetzt werden.

Hinter dem Verdichter (45), d.h. auf der Druckseite, auf der das Frigen verflüssigt wird, befinden sich mehrere Nachfilter (49), mit denen restliches Öl, Wasser und Fremdstoffe abgeschieden werden. Die beschriebenen Magnetventile sind bei (50 u. 51) wiedergegeben. Ein Kondensator (52) zur Verflüssigung des gereinigten Fluorkohlenwasserstoffes ist ebenfalls innerhalb der Gehäuseabdeckung (42) vorgesehen, während die Filterablässe der Filter (49) bei (51a) gezeichnet sind. Das gereinigte und verflüssigte FCKW gelangt nun in einen Sammelbehälter (54) mit einem Sicherheitsventil (53). Ein Kugelhahn (55) dient zur Absperrung des Sammelbehälters beim Austauschen der Filter auf der Druckseite.

Außerhalb der Gehäuseabdeckung (38a) befindet sich ein Kasten (56), welcher die Verteiler für die verschiedenen Leitungen und deren Steuerung enthält.

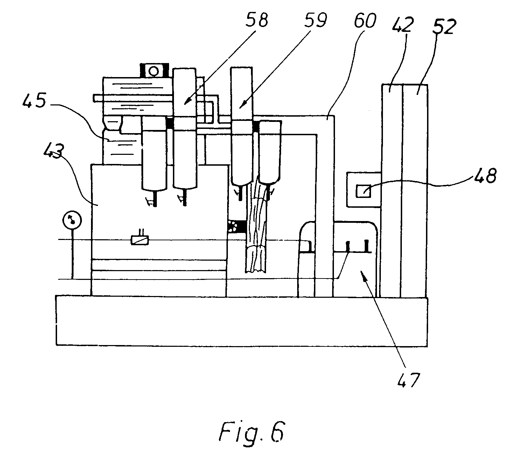

Aus der Darstellung der Fig. 6 sind die Verdichter (45 und 47) ersichtlich. Der Antriebsmotor für den Verdichter (45) ist bei (43) dargestellt. Die Filter (58 u. 59) befinden sich auf einem Träger (60) neben den beschriebenen Anlagenteilen. Sie sind daher für sich zugänglich und zu warten.

Nach Fig. 2 sind diese Filter (58, 59) noch einmal vorhanden und in einem gesonderten Gehäuse bei (61) untergebracht, das in die Fülleitung (63) eines Auffangbehälters (64) eingeschaltet ist, der auf einer Waage (65) steht und das gereinigte FCKW aufnimmt. Die Waage kann mit verschiedenen Schaltpunkten, z.B. 5 kg, 15 kg, 35 kg, 94 kg je nach Größe des Auffangbehälters versehen werden und schaltet nach vorgegebener Füllung über die Leitung (66) die Anlage ihrerseits aus.

Die beschriebene Anlage arbeitet wie folgt: Nachdem mit Hilfe der beschriebenen Anstech-Zange über den Saugschlauch (17) der Auslaß des Kühlkreislaufes im Kühlschrank (15) an die Anlage angeschlossen worden ist, wodurch das Frigen-Ölgemisch aus dem Kühlkreislauf abgesaugt und in den Ölabscheider überführt wird. Dort wird es aufgeheizt, so daß das Frigen in gasförmiger Phase durch die ebenfalls saugende Leitung (32) in die Filteranordnung (34 bis 36) strömt. Dort werden Öl, Wasser und Fremdstoffe abgeschieden, welche durch einen Auslaß in ein separates Gefäß abgeleitet werden. Dabei kann durch eine Ölfilterheizung noch im Öl befindliches Restfrigen ausgetrieben, welches in die Saugleitung zurückgeführt wird.

Das so vom Öl befreite gasförmige Kältemittel durchströmt ein Wasserfilter, welches die im Frigen enthaltene Feuchtigkeit entfernt. Infolge der dabei auftretenden Abkühlung schlägt sich das Wasser ab und wird seinerseits über ein Magnetventil oder Handabsperrventil und einen Auslaßstutzen in einen separaten Behälter abgeführt

Die nun noch im Frigen enthaltenen Schmutzpartikel werden durch ein spezielles Filter entfernt.

Das nunmehr fast reine Kältemittel gelangt unter Umgehung von in das Gehäuse einbaubaren Filtern in den Verdichter (45). Dort wird das FCKW auf einen Überdruck von bis zu ca. 20 bar verdichtet und über eine Druckleitung entweder im Gehäuse oder außerhalb des Gehäuses untergebrachten Filtern (49; 58, 59) zugeführt, welche die Ölrückstände des Verdichters (45) aus dem verdichteten FCKW entfernen. Entfernt wird auch die Feuchtigkeit. Beim Verdichten wird das Frigen aufgeheizt und in einen Kondensator (52) geführt, der das Frigen abkühlt und verflüssigt. Dieses FCKW befindet sich im Behälter (54), aus dem es unmittelbar in den Auffangbehälter (64) gelangt Die Waage (65), auf der der Auflangbehälter (64) abgestellt ist, hat eine Elektronik, die so eingestellt wird, daß lediglich das Nettogewicht des eingefüllten Kältemittels angezeigt wird. Ist die zulässige Menge an flüssigem FCKW im Behälter (64) erreicht, so wird die Entsorgungsanlage abgeschaltet. Dabei können mehrere Entsorgungsbehälter (64) über T-Stücke aneinander angeschlossen werden, um größere FCKW-Mengen aufzunehmen.

Nach Absaugen der beschriebenen Stoffe aus dem Kühlkreislauf des Kühlschrankes (15) wird dieser demontiert, wobei der PUR-Schaum des Kühlgerätes von den übrigen Teilen separiert wird.

Über einen nicht dargestellten Shredder wird der Schaumstoff zunächst vorzerkleinert und gelangt durch ein Rohr (77) in eine Luftschleuse (75) und aus dieser über einen Trichter (76) in eine Zerkleinerungsvorrichtung (78). Im oberen Teil (76a) befindet sich eine Vorzerkleinerung (78), die von einem Motor (79) angetrieben wird. Das vorzerkleinerte Material fällt auf drei übereinander angeordnete Zahnwalzenpaare (80 bis 82). Die Zahnwalzen zerkleinern und zerreiben mit ihren ineinandergreifenden Verzahnungen das Material, wobei die vorlaufenden Zahnflanken (83) und die Zahnlücken (84) und die nachlaufenden Zahnflanken (85) untereinander zusammenwirken. Die Zahnwalzen arbeiten in luftdichten Gehäusen (86), welche über Zweigleitungen (87, 88, 89) an eine Leitung (90) zur Absaugung angeschlossen sind. Aus dem letzten Zahnwalzenpaar (82) fällt das staubförmige Gut in einen Fülltrichter (91) einer Luftschleuse (92), die den Staub ausschleust und in einen Sammelbehälter (93) füllt. Gemäß dem dargestellten Ausführungsbeispiel kann der Staub aus dem Behälter (93) über einen Fülltrichter (94) und eine Luftschleuse (95) in eine Presse (96) gelangen, in der er brikettiert wird. Die Briketts werden bei (97) abgezogen und können als Brennstoff verfeuert werden. Die Presse ist gekapselt und an eine Saugleitung (98) angeschlossen, welche das Treibmittel des Staubes über ein Magnetventil (99) absaugt.

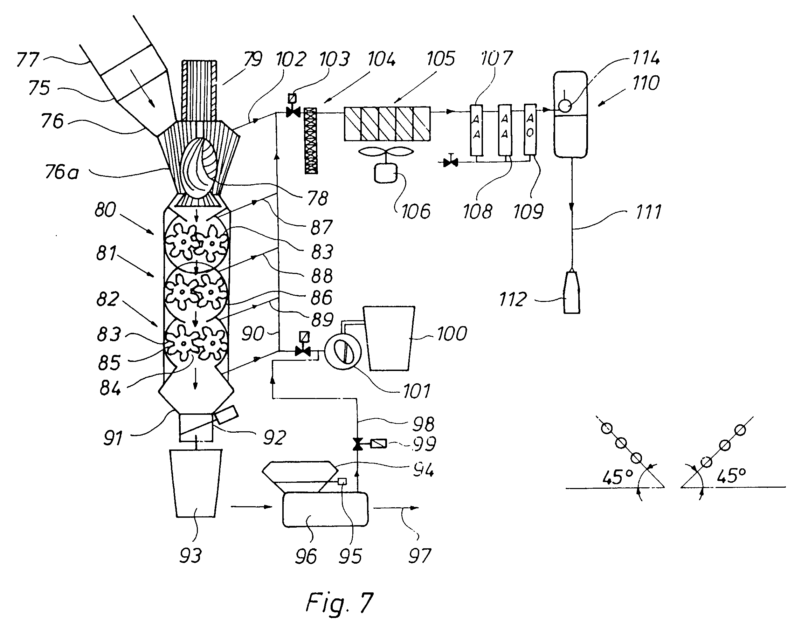

Bei dem dargestellten Ausführungsbeispiel der Fig. 7 dient ein Vakuumkompressor (101) zur Unterdruckerzeugung und arbeitet mit einem Aktivkohlefilter (100) zusammen. Der Vakuumkompressor (101) dient zur Betätigung der Unterdruckleitung (90), welche auch aus dem Gehäuse der Vorzerkleinerung und dessen Zweigleitung (102) das Treibmittel absaugt. Über ein Magnetventil (103) gelangt das abgesaugte Treibmittel zunächst in einen Staubfilter (104) und dann in einen Kondensator (105), dessen Belüftung bei (106) wiedergegeben ist. Eine Filtergruppe (107, 108, 109) führt Öl und andere Verunreinigungen im Kondensat ab, dessen Ablauf über ein Ventil (110) gesteuert ist. Das derart verflüssigte Treibmittel, welches ebenfalls aus Fluorkohlenwasserstoff, z. B. Frigen R11 besteht, gelangt über den Sammelbehälter (110) schließlich in eine Leitung (111) zu einem Auffangbehälter (112), in dem es einer weiteren Verwendung zugeführt wird.

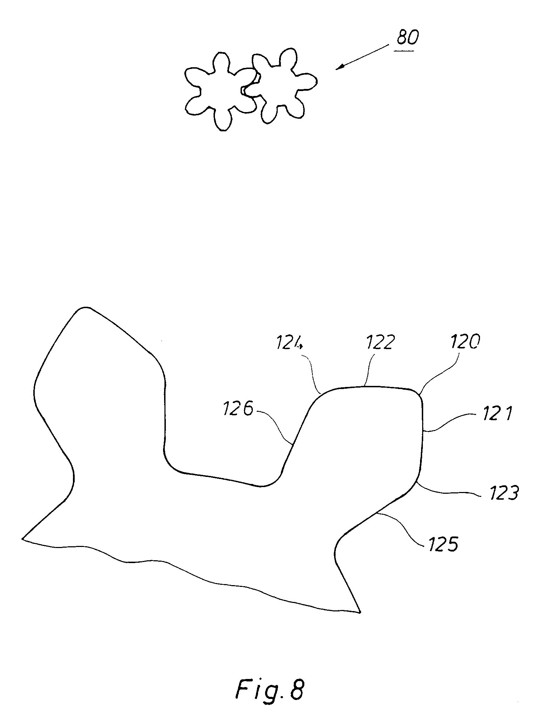

Die in Fig. 7 dargestellte Anordnung mit drei untereinander angeordneten Zahnwalzenpaaren (80 bis 82) läßt sich erweitern. Dann befinden sich über dem Fülltrichter (91) winkelversetzt, z.B. jeweils im Winkel von 45° Grad zur Senkrechten die Zahnwalzenpaaregruppen in doppelter Anordnung, so daß der erforderliche Durchsatz gewährleistet ist. Die auszugsweise Ansicht eines Zahnes der Zahnwalzen nach Fig. 8 zeigt, daß jeder der ineinandergreifenden Zähne im Anschuß an die Zahnspitze (120) Zahnspitzenflanken (121, 122) aufweist, die konvex gekrümmt sind. Über Wendepunkte (123, 124) geht dieses Teilprofil jedes Zahnes in Zahnfußflanken (124, 126) über. Gerät ein Partikel der Vorzerkleinerung zwischen die im Eingriff stehenden Zähne. so wird es entlang der Fußflanken (125, 126) zunächst zusammengepreßt, dann aber hohen Scherkräften unterworfen, die es zerreiben und dadurch seine Poren öffnen.

Es hat sich überraschend gezeigt, daß derart gestaltete Zahnwalzen sich nicht durch das übliche Isoliermaterial zusetzen können und dadurch ein fortlaufender Zerkleinerungsbetrieb ohne Störungen möglich ist. Die Verwendung von Zahnwalzen ermöglicht deren Beheizung oder Kühlung. Werden die Zahnwalzen gekühlt, so werden bei Kälteeinwirkung versprödende Isoliermaterialien leichter zerkleinert. Umgekehrt für die Beheizung der Zahnflanken ebenfalls unter entsprechenden Voraussetzungen zu einer vereinfachten Endzerkleinerung des Materials. Außerdem können die Zahnwalzen statisch aufgeladen werden. Die meisten Isoliermaterialien sind statisch aufladbar, so daß bei statisch aufgeladenen Zahnwalzen eine Beschleunigung der Partikel bzw. Moleküle auftritt.

## Patentansprüche

1. Anlage zur Rückgewinnung von Öl und Fluorkohlenwasserstoff (FCKW) aus ausrangierten Kühlmöbeln, zum Beispiel Kühlschränken, bei der ein Verdichter aus dem Kühlkreislauf des Kühlmöbels gasförmiges FCKW-Öl-Gemisch über eine Absaugleitung und eine erste Filterkombination zur Filterung von Öl, Wasser und Feststoffen absaugt und das so gereinigte sowie auf der Druckseite des Verdichters in einem Kondensator verflüssigte FCKW zuvor über eine zweite Filterkombination zur Filterung von Öl, Wasser und Feststoffen aus dem Verdichter in einen Auffangbehälter drückt, **dadurch gekennzeichnet,**
daß zwischen den Kühlmöbeln und der ersten Filterkombination (34-36) ein Ölabscheider (30) angeordnet ist und daß bis auf den Ölabscheider (30) alle Anlagenteile in einem gemeinsamen Gehäuse (38) untergebracht sind und die Filterkombinationen (34-36) entweder in getrennten Gehäusen (33, 61) mit Anschlüssen (37, 61a) an das gemeinsame Gehäuse (38) oder in diesem (38) vorgesehen sind, wobei der Betrieb der Anlage wahlweise über die extern angeordneten Filterkombinationen (34-36) oder über die direkt im gemeinsamen Gehäuse (38) untergebrachten Filterkombinationen (49, 58, 59) erfolgt.

2. Anlage nach Anspruch 1, **dadurch gekennzeichnet,** daß der an einen Kühlkreislauf eines ausrangierten Kühlmöbels anzuschließende Ölabscheider (30) in unmittelbarer Nähe der ausrangierten Kühlmöbel angeordnet und ihm ein zweiter, kleinerer Verdichter (47) zugeordnet ist, der zum Absaugen von Luft aus dem Ölabscheider (30) nach dem Abführen des abgeschiedenen Öls dient und zusammen mit den anderen Anlagenteilen sowie einem Ölabscheider (46) für das Öl aus dem Verdichter (45) in dem gemeinsamen Gehäuse (38) untergebracht ist.

3. Anlage nach Anspruch 1 oder 2, **dadurch gekennzeichnet,** daß das gemeinsame Gehäuse (38) von einem Gebläse (42) zur Kühlung des Antriebsmotors (43) und des Kondensators (52) belüftet und die Druckseite des Gebläses (42) an die freie Atmosphäre anschließbar ist.

4. Anlage nach einem der Ansprüche 1 bis 3, **dadurch gekennzeichnet,** daß der Ölabscheider (30) an einem der Entleerung eines jeden Kühlkreislaufes der ausrangierten Kühlmöbel dienenden, mit Arbeitsplätzen versehenen Fließband (2, 3) angeordnet ist, wobei für jeden Arbeitsplatz eine Druckschalteranordnung (8, 9, 10) oder Handabsperrventile vorgesehen sind, die zur An- und Ausschaltung der Absaugung des gasförmigen FCKW-Öl-Gemisches dienen.

5. Anlage nach Anspruch 4, **dadurch gekennzeichnet,** daß der Ölabscheider (30) unter dem Fließband (2, 3) angeordnet ist.

6. Anlage nach einem der Ansprüche 1 bis 5, **dadurch gekennzeichnet,** daß eine zur Öffnung des Kühlkreislaufes in die Absaugleitung (17) dienende Anstech-Zange (16) einen freiliegenden Anschlußnippel (22) für eine an die Absaugleitung (17) anschließbare Saugleitung (20) aufweist, der in einer Kehle (22a) eines Perforationsträgers (24a) angeordnet ist, der mit einer Schweißnaht (18a) an dem festen Zangenschenkel (18) der Anstech-Zange (16) befestigt ist.

7. Anlage nach einem der Ansprüche 1 bis 6, **dadurch gekennzeichnet,** daß zur Aufständerung der in einem gemeinsamen Gehäuse (38) untergebrachten Anlagenteile ein Rahmen (40) und ein Träger (39) dienen, wobei die Saugseite des Gebläses (42) einem Hohlraum (41) unter dem Rahmen (40) zugeordnet ist.

8. Anlage nach einem der Ansprüche 1 bis 7, **gekennzeichnet durch** eine Anlage zur Rückgewinnung des Treibmittels, insbesondere des FCKW in Kälteisoliermaterialien, bei der vorzerkleinertes Kälteisoliermaterial zwischen Zahnwalzenpaaren (80-82) gelangt, deren ineinandergreifende Zähne (128) konvex scherend wirkende Zahnspitzenflanken (121, 122) und konkave, pressend wirkende Zahnfußflanken (125, 126) aufweisen, wobei das Kälteisoliermaterial von den Zähnen zerreibbar ist.

9. Anlage nach Anspruch 8, **dadurch gekennzeichnet,** daß die Zahnwalzenpaare (80-82) in abgeschlossenen Gehäusen untergebracht sind, aus denen Leitungen (87-89) in eine Zentralleitung (90) abzweigen, welche das freigewordene Treibmittel einem Kondensator (105) und einer Filteranordnung (107-109) zuführt, der ein Entsorgungsbehälter (112) zur Aufnahme des gereinigten, verflüssigten Treibmittels nachgeschaltet ist und daß das von den Zahnwalzenpaaren (80-82) endzerkleinerte Isoliermaterial vor seiner Weiterverarbeitung und Deponierung durch eine Luftschleuse (92) leitbar ist.

10. Anlage nach Anspruch 8 oder 9, **dadurch gekennzeichnet,** daß die Zahnwalzenpaare (80-82) hintereinandergeschaltet sind.

11. Anlage nach einem der Ansprüche 8 bis 10, **dadurch gekennzeichnet,** daß mehrere hintereinandergeschaltete Zahnwalzenpaare (80-82) in Gruppen angeordnet und die Gruppen gegen die Senkrechte und gegeneinander winklig angeordnet sind.

12. Anlage nach einem der Ansprüche 8 bis 11, **dadurch gekennzeichnet,** daß den Zahnwalzenpaaren (80-82) eine Vorzerkleinerung (78) in einem abgeschlossenen Gehäuse (76a) mit einer Abführungsleitung (102) für das Treibmittel vorgeschaltet ist.

13. Anlage nach einem der Ansprüche 9 bis 12, **dadurch gekennzeichnet,** daß der durch die Luftschleuse (92) abgeführte Staub über eine weitere Luftschleuse (95) einer Brikettpresse (96) zugeführt wird, aus deren geschlossenem Gehäuse eine Saugleitung (98) zur Abführung des Treibmittels herausgeführt ist.

14. Anlage nach einem der Ansprüche 8 bis 13, **dadurch gekennzeichnet,** daß zur Unterdruckerzeugung ein Vakuumkompressor (101) mit nachgeschaltetem Aktivkohlefilter (100) vorgesehen ist.

15. Anlage nach einem der Ansprüche 8 bis 14, **dadurch gekennzeichnet,** daß die Zahnwalzenpaare (80-82) beheizt oder gekühlt sind.

16. Anlage nach einem der Ansprüche 8 bis 15, **dadurch gekennzeichnet,** daß die Zahnwalzenpaare (80-82) statisch aufgeladen sind.

## Claims

1. Installation for recovering oil and chlorofluorocarbons (CFCs) from discarded cooling appliances, for example, refrigerators, in which a compressor evacuates a gaseous CFC-oil mixture from the cooling circuit of the cooling appliance by way of an extraction line and a first filter combination to filter oil, water and solids, and forces the CFC, refined in this way and liquefied on the pressure side of the compressor in a condenser, firstly by way of a second filter combination to filter oil, water and solids out of the compressor into a receiving container, characterised in that between the cooling appliances and the first filter combination (34-36) an oil separator (30) is disposed, and that except for the oil separator (30) all installation parts are housed in a common housing (38) and the filter combinations (34-36) are provided either in separate housings (33, 61) with connections (37, 61a) to the common housing (38) or in this housing (38), wherein the operation of the installation is achieved alternatively be means of the externally disposed filter combinations (34-36) or by means of the filter combinations (49, 58, 59) housed directly in the common housing (38).

2. Installation according to claim 1, characterised in that the oil separator (30) to be connected to a cooling circuit of a discarded cooling appliance is disposed in the immediate proximity of the discarded cooling appliances and a second smaller compressor (47) is allocated to it which serves to evacuate air from the oil separator (30) after the separated oil has been removed and which is housed in the common housing (38) together with the other installation parts and an oil separator (46) for the oil from the compressor (45).

3. Installation according to claim 1 or 2, characterised in that the common housing (38) is ventilated by a ventilator (42) to cool the driving motor (43) and the condenser (52), and the pressure side of the ventilator (42) can be opened to the free atmosphere.

4. Installation according to any of claims 1 to 3, characterised in that the oil separator (30) is disposed at a conveyor line (2, 3) serving to empty the respective cooling circuit of the discarded cooling appliances and provided with working positions, wherein for each working position a pressure switching arrangement (8, 9, 10) or manual shut-off valves are provided, which serve to switch on and off the evacuation of the gaseous CFC-oil mixture.

5. Installation according to claim 4, characterised in that the oil separator (30) is disposed under the conveyor line (2, 3).

6. Installation according to any of claims 1 to 5, characterised in that a priming clamp (16) serving to open the cooling circuit into the extraction line (17) comprises an exposed connection fitting (22) for a suction line (20) which can be connected to the extraction line (17), which fitting is disposed in a hollow (22a) of a perforator holder (24a) which is fixed with a weld seam (18a) to the fixed clamp limb (18) of the priming clamp (16).

7. Installation according to any of claims 1 to 6, characterised in that a frame (40) and a support (39) serve to support the installation parts housed in a common housing (38), wherein the suction side of the ventilator (42) is allocated to a hollow space (41) under the frame (40).

8. Installation according to any of claims 1 to 7, characterised by an installation for recovering the working fluid, in particular CFC, in cold insulating materials, in which the preliminary crushed cold insulating material passes between pairs of toothed rollers (80-82), of which the mutually engaging teeth (128) comprise tooth point edges (121, 122) operating so as to shear in a convex manner and concave tooth base edges (125, 126) operating in a pressing manner, wherein the cold insulating material can be crushed by the teeth.

9. Installation according to claim 8, characterised in that the pairs of toothed rollers (80-82) are housed in closed housings from which lines (87-89) branch into a central line (90) which supplies the released working fluid to a condenser (105) and to a filter arrangement (107-109) downstream of which a disposal container (112) is connected to receive the refined liquefied working fluid, and in that the insulating material finally crushed by the pairs of toothed rollers (80-82) can be passed through an air lock (92) prior to its further processing and dumping.

10. Installation according to claim 8 or 9, characterised in that the pairs of toothed rollers (80-82) are connected one behind the other.

11. Installation according to any of claims 8 to 10, characterised in that a plurality of pairs of toothed rollers (80-82) connected one behind the other are disposed in groups and the groups are disposed angled with respect to the vertical and to each other.

12. Installation according to any of claims 8 to 11, characterised in that a preliminary crushing device (78) in a closed housing (76a) with an outlet line (102) for the working fluid is connected in series with the pairs of toothed rollers (80-82).

13. Installation according to any of claims 9 to 12, characterised in that the dust carried away through the air lock (92) is fed by way of a further air lock (95) to a briquetting press (96), from the closed housing of which leads a suction line (98) to carry away the working fluid.

14. Installation according to any of claims 8 to 13, characterised in that a vacuum compressor (101) with an activated carbon filter (100) connected downstream is provided to produce negative pressure.

15. Installation according to any of claims 8 to 14, characterised in that the pairs of toothed rollers (80-82) are heated or cooled.

16. Installation according to any of claims 8 to 15, characterised in that the pairs of toothed rollers (80-82) are statically charged.

## Revendications

1. Installation pour le recyclage de l'huile et d'hydrocarbures fluorés de réfrigérateurs hors service, par exemple de réfrigérateurs ménagers, dans laquelle un compresseur aspire un mélange gazeux d'hydrocarbures fluorés et d'huile, via une conduite d'aspiration et une premiére combinaison de filtres pour le filtrage de l'huile, de l'eau et des matières solides, et dans laquelle les hydrocarbures fluorés ainsi purifiés et liquéfiés dans un condenseur agencé du côté sous pression du compresseur sont envoyés du compresseur au travers d'une deuxième combinaison de filtres pour le filtrage de l'huile, de l'eau et des matières solides, dans un récipient,
caractérisé en ce qu'un séparateur d'huile (30) est agencé entre les réfrigérateurs et la première combinaison de filtres (34-36), et en ce que tous les éléments de l'installation excepté le séparateur d'huile (3O) sont agencés dans un boîtier commun (38) et les combinaisons de filtres (34-36) sont agencées soit dans des carters individuels (33,61) munis de raccords (37,61a) au boîtier commun (38), soit dans celui-ci (38), le fonctionnement de l'installation s'effectuant soit par les combinaisons de filtres extérieures (34-36), soit par les combinaisons de filtres (49,58,59) agencées directement dans le boîtier commun (38).

2. Installation selon la revendication 1 caractérisée en ce que le séparateur d'huile (3O) destiné à être raccordé au circuit de refroidissement d'un réfrigérateur hors service est agencé à proximité immédiate des réfrigérateurs hors service et est associé à un deuxième compresseur, plus petit (47), qui sert à aspirer l'air du séparateur d'huile (3O) après l'évacuation de l'huile séparée et qui est agencé avec les autres éléments de l'installation ainsi qu'un séparateur d'huile (46) pour l'huile venant du compresseur (45), dans le boîtier commun (38).

3. Installation selon la revendication 1 ou 2 caractérisée en ce que le boîtier commun (38) est aéré par une soufflerie (42) pour le refroidissement du moteur d'entraînement (43) et du condenseur (52) et le côté sous pression de la soufflerie (42) est raccordable à l'air libre.

4. Installation selon l'une des revendications 1 à 3 caractérisée en ce que le séparateur d'huile (3O) est agencé à proximité d'un transporteur à bande (2,3)muni de postes de travail, en vue du vidage de chaque circuit de refroidissement des réfrigérateurs hors service, chaque poste de travail étant équipé de boutons poussoirs (8,9,1O) ou de vannes d'obturation qui servent à la mise en marche ou à l'arrêt de l'aspiration du mélange gazeux d'hydrocarbures fluorés et d'huile.

5. Installation selon la revendication 4 caractérisée en ce que le séparateur d'huile (3O) est agencé en dessous du transporteur à bande (2,3).

6. Installation selon l'une des revendications 1 à 5 caractérisée en ce qu'une pince de perçage (16) agencée dans la conduite d'aspiration (17) et destinée à l'ouverture du circuit de refroidissement comporte un raccord fileté libre (22) qui est destiné au raccordement d'un tube d'aspiration (20) raccordable à la conduite d'aspiration (17) et qui est agencé dans une gorge (22a) d'un support de perforatrice (24a) qui est solidarisé par un joint de soudure (18a) à la branche de pince fixe (18) de la pince de perçage (16).

7. Installation selon l'une des revendications 1 à 6 caractérisée en ce qu'un cadre (4O) et un support (39) servent au positionnement des éléments de l'installation dans un boîtier commun (38), le côté de l'aspiration de la soufflerie (42)étant associé à un espace creux (41) en dessous du cadre (4O).

8. Installation selon l'une des revendications 1 à 7 caractérisée par une installation pour le recyclage de l'agent moussant, notamment des hydrocarbures fluorés, des matériaux thermoisolant , dans laquelle le matériau thermoisolant réduit en morceaux au préalable passe entre des paires de rouleaux à dents (8o-82), dont les dents qui s'engrènent (128) comportent des flancs de sommet de denture(121,122) convexes cisaillants et des pieds de denture (125,126) concaves comprimants, le matériau thermoisolant étant apte à être broyé par lesdites dents.

9. Installation selon la revendication 8 caractérisée en ce que les paires de rouleaux à dents (8O-82) sont logées dans des boîtiers fermés dont des conduites (87-89) partent vers une conduite centrale (8O) qui alimente l'agent moussant extrait dans un condenseur (1O5) et un ensemble de filtres (1O7-1O9), suivi par un récipient dévacuation (112) pour la collecte de l'agent moussant purifié et liquéfié, et en ce que le matériau isolant finalement broyé par les paires de rouleaux à dents (8O,82) est transportable dans une écluse à air avant son traitement ultérieur et entreposage.

10. Installation selon la revendication 8 ou 9 caractérisée en ce que les paires de rouleaux à dents (8O-82) sont agencées en série.

11. Installation selon l'une des revendications 8 à 1O caractérisée en ce que plusieurs paires de rouleaux à dents (8O-82) sont agencées en groupes et en ce que les groupes sont agencés selon un angle par rapport à la verticale et l'un par rapport à l'autre.

12. Installation selon l'une des revendications 8 à 11 caractérisée en ce que les paires de rouleaux à dents (8O-82) sont précédées d'un broyage préalable (78) dans un boîtier fermé (76a) équipé d'une conduite d'évacuation (1O2) de l'agent moussant.

13. Installation selon l'une des revendications 9 à 12 caractérisée en ce que la poussière évacuée par l'écluse à air (92) est ensuite mené par une autre écluse à air (95) vers une presse de briquetage (96) dont le carter fermé est muni d'une conduite d'aspiration (98) pour l'évacuation de l'agent moussant.

14. Installation selon l'une des revendications 8 à 13 caractérisée en ce qu'un compresseur à vide (1O1) équipe en aval d'un filtre à charbon actif (1OO) est prévu pour l'établissement du vide.

15. Installation selon l'une des revendications 8 à 14 caractérisée en ce que les paires de rouleaux à dents (8O-82) sont chauffées ou refroidies.

16. Installation selon l'une des revendications 8 à 15 caractérisée en ce que les paires de rouleaux à dents (8O-82) sont chargées statiquement.
